# FASCICULE DE BREVET EUROPEEN

(11) **EP 3 807 580 B1**
(45) Date de publication et mention de la délivrance du brevet: **28.09.2022**
(21) Numéro de dépôt: 19729772.4
(22) Date de dépôt: 14.06.2019
(51) Int. Cl.: E04F 10/10, F24S 30/20, E04F 10/08, H02S 20/30, H02S 20/10, F24S 30/425, F24S 25/12, H02S 20/23

(54) **OMBRIÈRE AJUSTABLE ENTRAÎNÉE PAR POULIES**
DURCH ROLLEN ANGETRIEBENES, VERSTELLBARES ROLLLADENGEHÄUSE
ADJUSTABLE SHADE HOUSE DRIVEN BY PULLEYS

(30) Priorité: 15.06.2018 FR 1855277
(43) Date de publication de la demande: 21.04.2021
(73) Titulaire: Ombrea, 13100 Aix-en-Provence (FR)
(72) Inventeur: DAVICO, Christian, 13790 ROUSSET (FR)
(74) Mandataire: Lavoix
(86) Numéro de dépôt international: PCT/EP2019/065727
(87) Numéro de publication internationale: WO 2019/238942

(56) Documents cités:
- EP-A2- 2 507 564
- EP-B1- 2 507 564
- WO-A1-2015/085442
- FR-A1- 3 019 883
- US-A1- 2009 250 094
- US-A1- 2013 305 634

## Description

La présente invention concerne une ombrière adaptée pour former une ombre ajustable sur une surface, notamment une surface plantée.

L'invention concerne également un procédé pour former et ajuster une telle ombre.

Une ombrière est un dispositif destiné à fournir de l'ombre, comprenant en général une surface à claire-voie et des supports. Un tel dispositif est notamment décrit dans le document JP-A-2016067272. Comme visible sur la figure 1 de ce document, l'ombrière comporte des panneaux photovoltaïques régulièrement espacés. Chaque panneau est monté inclinable sur un poteau.

Une telle ombrière nécessite un grand nombre de poteaux et de systèmes d'actionnement des panneaux. En outre, elle ne permet de régler l'ombre formée que sur une plage de variation relativement limitée.

Le document FR 3 019 883 A1 décrit également une ombrière.

Un but de l'invention est de réduire tout ou partie des inconvénients ci-dessus, c'est-à-dire en particulier de proposer une ombrière plus simple tout en permettant la production d'électricité.

A cet effet, l'invention concerne une ombrière adaptée pour former une ombre ajustable sur une surface, notamment une surface plantée, l'ombrière comprenant :
- au moins un châssis s'étendant selon une direction longitudinale,
- un premier ensemble de panneaux photovoltaïques montés sur le châssis sensiblement orthogonaux à un même axe d'orientation, fixes les uns par rapport aux autres, et répartis successivement selon la direction longitudinale,
- un deuxième ensemble de panneaux opaques, de préférence photovoltaïques, montés sur le châssis sensiblement orthogonaux à l'axe d'orientation, fixés les uns aux autres, et répartis successivement selon la direction longitudinale, le deuxième ensemble étant mobile en translation longitudinalement par rapport au châssis au moins entre une configuration ouverte de l'ombrière, dans laquelle les panneaux du deuxième ensemble sont au moins partiellement, et de préférence totalement, superposés aux panneaux du premier ensemble en vue selon l'axe d'orientation, et une configuration fermée de l'ombrière, dans laquelle les panneaux du deuxième ensemble dépassent au moins partiellement, et de préférence totalement, des panneaux du premier ensemble en vue selon l'axe d'orientation,
- optionnellement un troisième ensemble de panneaux opaques, de préférence photovoltaïques, montés sur le châssis sensiblement orthogonaux à l'axe d'orientation, fixés les uns aux autres, et répartis successivement selon la direction longitudinale, le troisième ensemble étant mobile en translation longitudinalement par rapport au châssis au moins entre la configuration ouverte, dans laquelle les panneaux du troisième ensemble sont au moins partiellement, et de préférence totalement, superposés aux panneaux du premier ensemble en vue selon l'axe d'orientation, et la configuration fermée, dans laquelle les panneaux du troisième ensemble dépassent au moins partiellement, et de préférence totalement, des panneaux du premier ensemble et des panneaux du deuxième ensemble en vue selon l'axe d'orientation, et
- un système d'actionnement configuré pour actionner le deuxième ensemble, et optionnellement le troisième ensemble, au moins de la configuration ouverte à la configuration fermée, et inversement, le système d'actionnement comportant une pluralité de poulies montée sur le châssis.

Selon des modes particuliers de réalisation, l'ombrière comprend l'une ou plusieurs des caractéristiques suivantes, prise(s) seule ou selon toutes les combinaisons techniquement possibles :
- les panneaux du deuxième ensemble sont fixés les uns aux autres par au moins deux câbles, et, optionnellement, les panneaux du troisième ensemble sont fixés les uns aux autres par les câbles ;
- chacun des deux câbles forment respectivement un lacet fermé, chacun des lacets étant tendu respectivement entre deux des poulies ;
- le système d'actionnement comprend en outre : au moins un arbre monté rotatif sur le châssis, et au moins un moteur configuré pour entraîner l'arbre, deux des poulies étant fixées sur l'arbre ;
- les panneaux du premier ensemble sont fixes par rapport au châssis ;
- dans la configuration fermée, les panneaux sont sensiblement adjacents les uns aux autres en vue selon l'axe d'orientation ;
- les panneaux présentent une même extension selon la direction longitudinale ;
- les panneaux du premier ensemble sont répartis régulièrement selon la direction longitudinale, deux panneaux successifs du premier ensemble étant séparés longitudinalement par un même écart ; les panneaux du deuxième ensemble sont répartis régulièrement selon la direction longitudinale, deux panneaux successifs du deuxième ensemble étant séparés longitudinalement par ledit écart ; et optionnellement les panneaux du troisième ensemble sont répartis régulièrement selon la direction longitudinale, deux panneaux successifs du troisième ensemble étant séparés longitudinalement par ledit écart, ledit écart étant sensiblement égal à deux fois ladite extension si l'ombrière comporte le troisième ensemble optionnel, ou sensiblement égal à ladite extension si l'ombrière ne comporte pas le troisième ensemble optionnel ;
- le châssis comprend deux longerons opposés selon une direction transversale perpendiculaire à la direction longitudinale ; et les panneaux du deuxième ensemble et optionnellement les panneaux du troisième ensemble s'étendent transversalement entre les longerons et sont supportés par les longerons ;
- les longerons définissent des rainures de guidage des panneaux ; et les panneaux du deuxième ensemble et optionnellement les panneaux du troisième ensemble comportent des roulettes adaptées pour rouler dans lesdites rainures ; et
- le châssis comprend au moins un support, et une partie mobile incluant les deux longerons, la partie mobile étant déplaçable en rotation par rapport au support autour d'un axe de pivotement sensiblement parallèle à la direction longitudinale entre au moins deux positions distinctes.

L'invention a également pour objet un procédé pour former et ajuster une ombre sur une surface, comprenant les étapes suivantes :
- fourniture d'une ombrière telle que décrite ci-dessus,
- actionnement du deuxième ensemble pour déplacer le deuxième ensemble en translation longitudinalement par rapport au châssis au moins entre la configuration ouverte de l'ombrière et la configuration fermée, ou inversement,
- optionnellement actionnement du troisième ensemble pour déplacer le troisième ensemble en translation longitudinalement par rapport au châssis au moins entre la configuration ouverte de l'ombrière et la configuration fermée, ou inversement, et
- production d'électricité par au moins certains des panneaux, et récupération de l'électricité produite.

L'invention sera mieux comprise à la lecture de la description qui va suivre, donnée uniquement à titre d'exemple et faite en se référant aux dessins annexés, sur lesquels :
- la figure 1 est une vue schématique partielle en perspective d'une ombrière selon l'invention, l'ombrière étant dans une configuration fermée,
- la figure 2 est une vue schématique de profil de l'ombrière représentée sur la figure 1 selon une direction longitudinale de l'ombrière,
- la figure 3 est une vue schématique de dessus de l'ombrière représentée sur les figures 1 et 2, l'ombrière étant dans une configuration ouverte,
- la figure 4 est une vue schématique en section selon un plan vertical longitudinal de l'ombrière représentée sur les figures 1 à 3,
- la figure 5 est une vue schématique en section selon un plan vertical transversal d'un panneau mobile de l'ombrière représentée sur les figures 1 à 3, et
- la figure 6 est une vue schématique en section d'une articulation du châssis de l'ombrière représentée sur les figures 1 à 3.

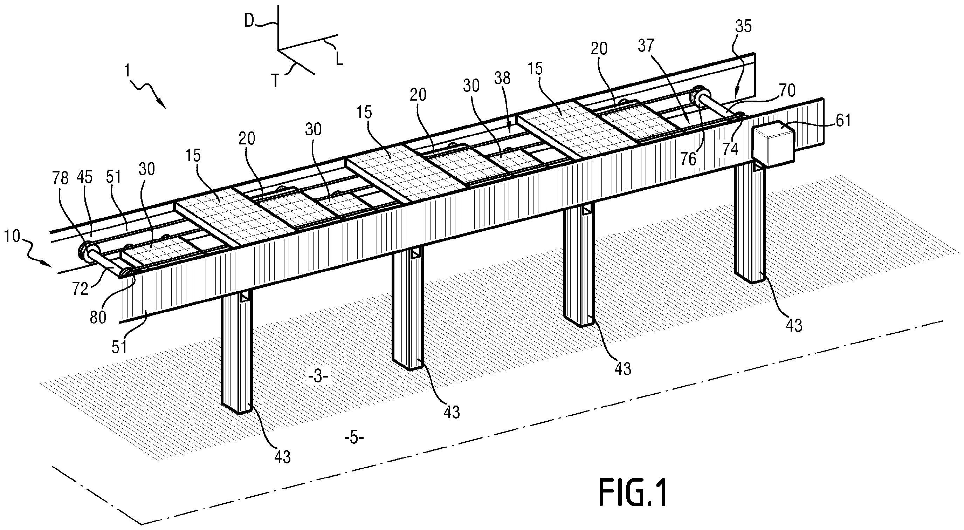

En référence aux figures 1 à 4, on décrit une ombrière 1 selon l'invention. L'ombrière 1 est adaptée pour former une ombre 3 sur une surface 5 telle qu'un sol comportant avantageusement des cultures ou des plantations (non représentées).

L'ombrière 1 comprend un châssis 10 s'étendant selon une direction longitudinale L par exemple sensiblement parallèle au sol 5, un premier ensemble de panneaux 15 montés sur le châssis 10 sensiblement orthogonaux à un même axe d'orientation D orthogonal à la direction longitudinale L, un deuxième ensemble de panneaux 20 photovoltaïques, et un troisième ensemble de panneaux 30 photovoltaïques.

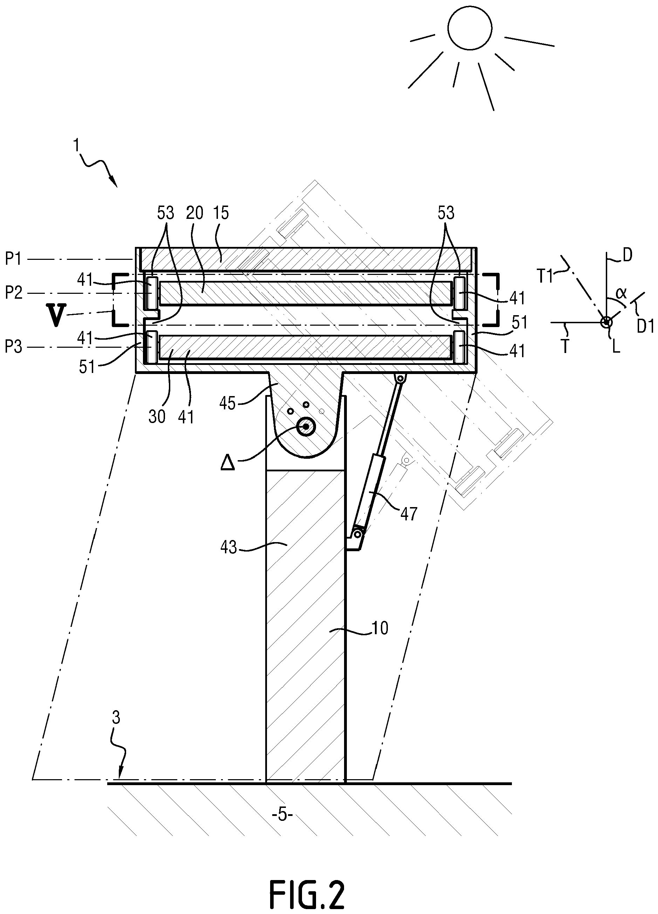

L'ombrière 1 comprend en outre un système d'actionnement 35 configuré pour actionner le deuxième ensemble et le troisième ensemble, au moins d'une configuration ouverte de l'ombrière, représentée sur les figures 2 à 4, à une configuration fermée, représentée sur la figure 1.

Il est à noter que les écarts entre le premier ensemble, le deuxième ensemble et le troisième ensemble selon l'axe de direction D ont été exagérés sur les figures pour mieux distinguer ces ensembles.

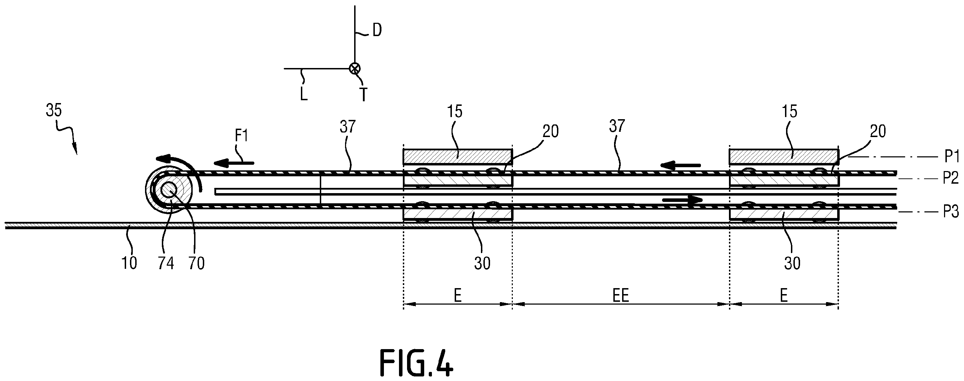

Les panneaux 15 du premier ensemble sont fixes les uns par rapport aux autres et répartis successivement selon la direction longitudinale L. Dans l'exemple représenté, les panneaux 15 sont fixés sur le châssis 10. Les panneaux 15 s'étendent par exemple dans un même plan P1 (figure 4) sensiblement perpendiculaire à l'axe d'orientation D. Dit autrement, tous les panneaux 15 du premier ensemble se situent au même niveau en projection sur l'axe d'orientation D.

Selon une variante non représentée, les panneaux 20 du deuxième ensemble et les panneaux 30 du troisième ensemble ne sont pas photovoltaïques, mais simplement opaques. On entend par « opaque », par exemple, que les panneaux sont adaptés pour réduire d'au moins 80% le flux radiatif reçu au sol directement depuis le soleil.

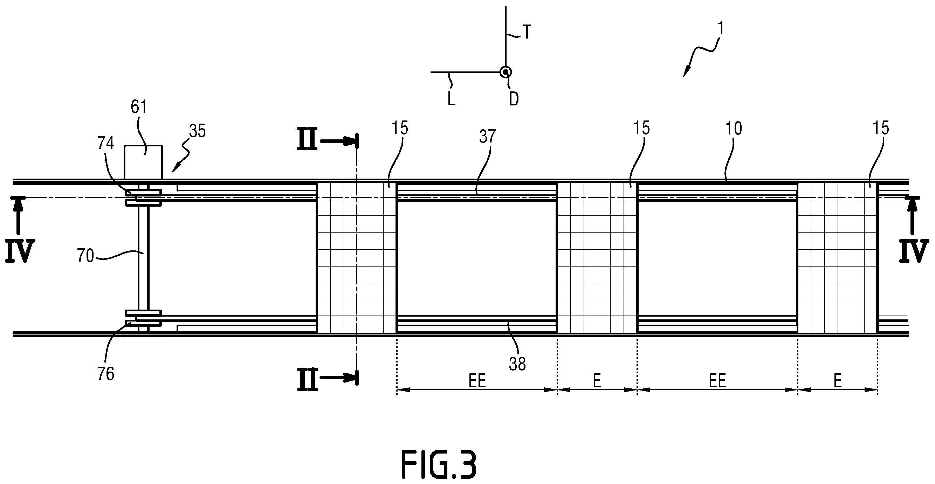

Les panneaux 20 sont fixés les uns aux autres, par exemple à l'aide de deux câbles 37, 38 du système d'actionnement 35 (figure 4), et sont répartis successivement longitudinalement. Les panneaux 20 sont montés sur le châssis 10 sensiblement orthogonaux à l'axe de direction D. Le deuxième ensemble est mobile en translation longitudinalement par rapport au châssis 10 entre la configuration ouverte (figures 2 et 3), dans laquelle les panneaux 20 sont totalement superposés aux panneaux 15 du premier ensemble en vue selon l'axe d'orientation D, et la configuration fermée (figure 1), dans laquelle les panneaux 20 dépassent totalement des panneaux 15 en vue selon l'axe d'orientation D.

Dans l'exemple représenté, les panneaux 15, 20, 30 sont structurellement identiques les uns aux autres, ce qui fait qu'une superposition totale est possible dans la configuration ouverte. Selon des variantes non représentées, dans la configuration ouverte, la superposition des panneaux 15 et 20 n'est pas totale.

Selon d'autres variantes non représentées, dans la configuration fermée, les panneaux 15 et 20 ne sont pas adjacents en vue selon l'axe d'orientation D comme représenté sur la figure 1, mais sont partiellement superposés. Dans tous les cas, la superposition est moindre dans la configuration ouverte que dans la configuration fermée, de façon à obtenir une ombre 3 plus importante dans la configuration fermée que dans la configuration ouverte.

Les panneaux 20 du deuxième ensemble s'étendent dans un plan P2 sensiblement parallèle au plan P1, et par exemple situé en-dessous du plan P1 selon l'axe d'orientation D.

Les panneaux 30 du troisième ensemble sont fixés les uns aux autres, par exemple par les câbles 37, 38, et sont répartis successivement selon la direction longitudinale L. Les panneaux 30 sont montés sur le châssis 10 sensiblement orthogonalement à l'axe de direction D. Tout comme le deuxième ensemble, le troisième ensemble est mobile en translation longitudinalement par rapport au châssis 10 entre la configuration ouverte, dans laquelle les panneaux 30 sont superposés avec les panneaux 15 en vue selon l'axe d'orientation D, et la configuration fermée, dans laquelle les panneaux 30 dépassent totalement des panneaux 15.

Selon une variante non représentée, les panneaux 30 sont fixés les uns aux autres par d'autres câbles que les câbles 37, 38, indépendants de ces derniers.

Les panneaux 30 du troisième ensemble s'étendent dans un plan P3 parallèle aux plans P1 et P2 et situé par exemple sous le plan P2 selon l'axe d'orientation D.

Avantageusement, les panneaux 15, 20, 30 présentent une même extension E selon la direction longitudinale L. De même, avantageusement, les panneaux 15, 20, 30 sont répartis régulièrement selon la direction longitudinale L et deux panneaux 15, 20, 30 successifs respectivement du premier ensemble, du deuxième ensemble ou du troisième ensemble sont séparés longitudinalement par un même écart EE.

Selon une variante non représentée, les câbles 37, 38 sont remplacés, entre les panneaux 20, 30, par des tiges (non représentées) adaptées pour solidariser les panneaux 20, 30 les uns par rapport aux autres.

Dans l'exemple représenté, l'écart EE est égal au double de l'extension E. Ainsi, dans la configuration fermée représentée sur la figure 1, les panneaux 15, 20, 30 sont adjacents longitudinalement.

Les panneaux 15, 20, 30 ont par exemple une épaisseur comprise entre 25 mm et 50 mm.

Par exemple, les plans P1, P2, et P3 lorsque le troisième ensemble est présent, sont séparés par une distance de 100 mm au maximum.

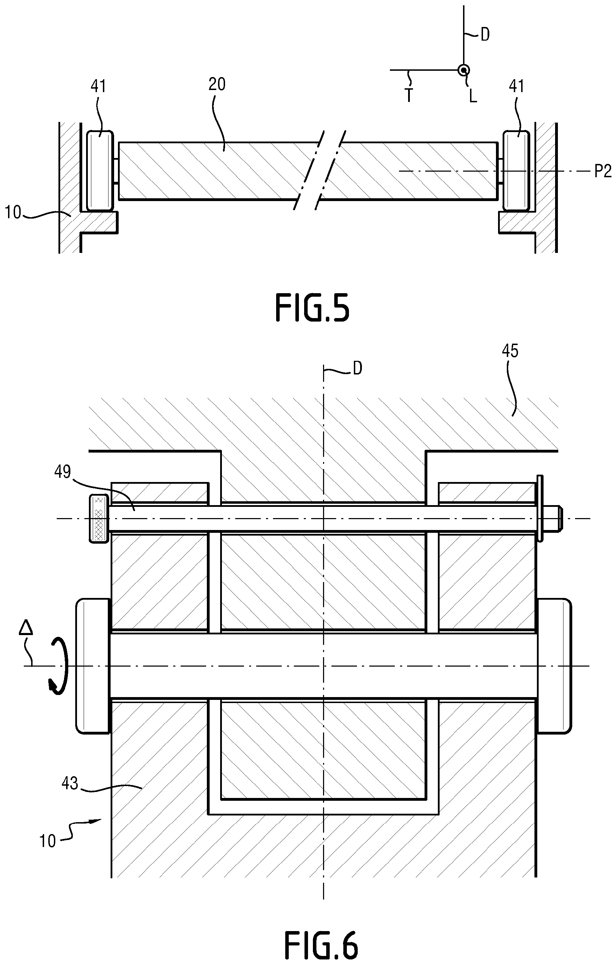

Les panneaux 20, 30 comportent avantageusement des roulettes 41 (figures 4 et 5).

Selon un mode de réalisation particulier, l'ombrière 1 ne comporte pas le troisième ensemble de panneaux. Dans ce cas, l'écart EE entre deux panneaux 15 successifs ou entre deux panneaux 20 successifs est avantageusement égal à l'extension E, et non au double de l'extension E.

D'une manière générale, l'ombrière 1 peut comprendre deux, trois, quatre, ou plus, ensembles de panneaux tels que décrit ci-dessus.

Selon un cas particulier (non représenté), les panneaux 15 du premier ensemble sont mobiles en translation par rapport au châssis 10. Ils sont par exemple actionnés manuellement.

Le châssis 10 comprend par exemple des supports 43 formant des poteaux, et une partie mobile 45 déplaçable en rotation par rapport au support 43 autour d'un axe de pivotement Δ sensiblement parallèle à la direction longitudinale L.

Les supports 43 sont par exemple régulièrement espacés longitudinalement, et sont avantageusement verticaux.

La partie mobile 45 est par exemple déplaçable entre une première position, représentée en traits pleins sur la figure 2, dans laquelle l'axe de direction D est avantageusement sensiblement vertical, et une deuxième position, représentée en traits mixtes, dans laquelle l'axe de direction D occupe une position D1 formant un angle α avec la verticale. L'angle α est par exemple compris entre 0 et 60 degrés.

La première position, peu ou pas inclinée, est dite « d'été ».

La deuxième position, plus inclinée, est dite « d'hiver » car elle est adaptée à un soleil plus bas par rapport à l'horizon.

Avantageusement, la partie mobile 45 est déplaçable à l'aide d'un vérin 47 entre une pluralité de positions (dont deux sont représentées).

En variante, la partie mobile 45 est déplacée manuellement, ou à l'aide d'un système mécanique, et bloquée à l'aide d'une clavette 49 (figure 6) dans au moins deux positions par rapport aux supports 43.

La partie mobile 45 définit un cadre à l'intérieur duquel les panneaux 20 et 30 sont configurés pour se déplacer. La partie mobile 45 comprend par exemple deux longerons 51 parallèles à la direction longitudinale L, et opposés selon une direction transversale T perpendiculaire à la direction longitudinale L et à l'axe d'orientation D.

La position angulaire de l'axe d'orientation D définit la position de la partie mobile 45 et l'orientation angulaire des panneaux 15, 20 30 atour de l'axe de pivotement Δ.

Les deux longerons 51 supportent les panneaux 15, 20, 30 qui s'étendent transversalement d'un longeron à l'autre.

Avantageusement, les longerons 51 définissent des rainures 53 adaptées pour recevoir les panneaux 20, 30.

Dans l'exemple représenté, les roulettes 41 des panneaux 20, 30 sont configurées pour rouler dans les rainures 53.

Selon une variante non représentée, les panneaux 20, 30 sont dépourvus de roulettes et glissent dans les rainures 53.

Outre les câbles 37, 38, le système d'actionnement 35 comprend deux arbres 70, 72 transversaux monté rotatifs sur le châssis 10, quatre poulies 74, 76, 78, 80, et un moteur d'entraînement 61 (figures 1, 3 et 4).

Les arbres 70, 72 sont par exemple situés sensiblement aux extrémités longitudinales du châssis 10.

Les poulies 74, 76 sont fixées sur l'arbre 70, avantageusement sur ses extrémités transversales, et sont configurées pour entraîner respectivement les câbles 37, 38.

Les poulies 78, 80 sont fixées sur l'arbre 72, avantageusement sur ses extrémités transversales, et sont des poulies de renvoi des câbles 37, 38 respectivement.

Le câble 37 forme un lacet fermé tendu entre les poulies 74 et 80. Le câble 37 est fixé sur chacun des panneaux 20, 30, par exemple sur leurs faces supérieures. Avantageusement, une moitié supérieure du câble 37 est fixée sur les panneaux 20 du deuxième ensemble, tandis qu'une moitié inférieure est fixé sur les panneaux 30 du troisième ensemble.

Le câble 38 forme aussi un lacet fermé (une boucle) tendu entre les poulies 76 et 78. Le câble 38 est fixé sur chacun des panneaux 20, 30, par exemple sur leurs faces supérieures. Avantageusement, une moitié supérieure du câble 38 est fixée sur les panneaux 20 du deuxième ensemble, tandis qu'une moitié inférieure est fixé sur les panneaux 30 du troisième ensemble.

Grâce à cette configuration, un même actionnement des câbles 37, 38 permet de déplacer longitudinalement les panneaux 20 et les panneaux 30 en sens opposés.

Selon une variante non représentée, les panneaux 20 et 30 sont respectivement actionnés par des câbles distincts. Dit autrement, chaque ensemble de panneaux possède ses propres câbles d'entraînement.

Selon d'autres variantes encore (non représentées), les ensembles de panneaux sont entraînés par un seul câble, par exemple situé transversalement sensiblement au milieu du châssis 10, ou sont entraînés par plus de deux câbles, communs ou non aux ensembles de panneaux.

Comme on le comprendra, le châssis 10 présente selon la direction longitudinale L une longueur adaptée au sol 5 à couvrir. Typiquement, la longueur du châssis 10 varie de quelques mètres à quelques dizaines, voire quelques centaines de mètres.

Selon des modes de réalisation particuliers (non représentés), l'ombrière 1 peut comporter plusieurs châssis analogues au châssis 10, et alignés selon la direction longitudinale L et/ou la direction transversale T de façon à couvrir une surface prédéterminée du sol 5. Ainsi, l'ombrière 1 peut comporter plusieurs châssis analogues au châssis 10 et juxtaposés les uns aux autres, chaque châssis comportant des ensembles de panneaux et des systèmes d'entraînement analogues à ceux décrits ci-dessus.

L'ombrière 1 comprend aussi des circuits électriques, non représentés et connus en eux-mêmes, pour collecter l'électricité produite par les panneaux 15, 20, 30.

Le fonctionnement de l'ombrière 1 va maintenant être décrit.

En fonction notamment de la saison ou d'autres critères, l'inclinaison de la partie mobile 45 est choisie. Pour ce faire, le vérin 47 est actionné pour mettre la partie mobile 45 dans la position souhaitée par rapport aux supports 43, par exemple la première position ou la deuxième position représentées sur la figure 2.

Dans le mode de réalisation où le choix de l'inclinaison est réalisé manuellement, la clavette 49 permet de bloquer la partie mobile 45 dans la position choisie par rapport aux supports 43.

Pour passer de la configuration ouverte, représentée sur les figures 3 et 4, à la configuration fermée, représentée sur la figure 1, le moteur 61 entraîne l'arbre 70 et les poulies 74, 76 en rotation par rapport au châssis 10. Ceci déplace les câbles 37, 38 selon la flèche F1 (figure 4).

Ainsi, les panneaux 20 du deuxième ensemble sont translatés longitudinalement vers la gauche de la figure 4, tandis que les panneaux 30 du troisième ensemble sont translatés vers la droite de la figure 4. Il en résulte que les panneaux 20 et 30, qui étaient situés parfaitement en dessous des panneaux 15 du premier ensemble se déplacent respectivement vers la gauche et vers la droite des panneaux 15 dont ils étaient les plus proches pour atteindre la configuration fermée représentée sur la figure 1, dans laquelle l'ombre 3 est maximale.

Dans l'exemple représenté, les poulies 78, 80 servent à tendre et renvoyer les câbles 37, 38.

Grâce aux caractéristiques décrites ci-dessus, l'ombrière 1 est plus simple que celles de l'art antérieur, et l'ombre 3 est réglable sur une vaste plage de réglage grâce aux déplacements des panneaux 20, 30, et avantageusement de la partie mobile 35.

Avantageusement aussi, grâce à l'arbre 70, aux poulies 74, 76 entraînant les câbles 37, 38, il est possible d'obtenir un déplacement du deuxième ensemble et du troisième ensemble à l'aide du moteur 61 unique.

L'ombrière 1 permet une modularité du taux d'ombrage sur une plage très large. En position repliée et verticale elle permet aux eaux de pluie d'irriguer les cultures. La possibilité d'incliner la partie mobile 45 permet, en cas de forte tempête, de réduire la prise au vent. En position déployée, la partie mobile 45 offre une protection des cultures contre la grêle.

## Revendications

1. - Ombrière (1) adaptée pour former une ombre (3) ajustable sur une surface (5), notamment une surface plantée, l'ombrière (1) comprenant :
- au moins un châssis (10) s'étendant selon une direction longitudinale (L),
- un premier ensemble de panneaux (15) photovoltaïques montés sur le châssis (10) sensiblement orthogonaux à un même axe d'orientation (D), fixes les uns par rapport aux autres, et répartis successivement selon la direction longitudinale (L),
- un deuxième ensemble de panneaux (20) opaques, de préférence photovoltaïques, montés sur le châssis (10) sensiblement orthogonaux à l'axe d'orientation (D), fixés les uns aux autres, et répartis successivement selon la direction longitudinale (L), le deuxième ensemble étant mobile en translation longitudinalement par rapport au châssis au moins entre une configuration ouverte de l'ombrière (1), dans laquelle les panneaux (20) du deuxième ensemble sont au moins partiellement, et de préférence totalement, superposés aux panneaux 15) du premier ensemble en vue selon l'axe d'orientation (D), et une configuration fermée de l'ombrière (1), dans laquelle les panneaux (20) du deuxième ensemble dépassent au moins partiellement, et de préférence totalement, des panneaux (15) du premier ensemble en vue selon l'axe d'orientation (D),
- optionnellement un troisième ensemble de panneaux (30) opaques, de préférence photovoltaïques, montés sur le châssis (10) sensiblement orthogonaux à l'axe d'orientation (D), fixés les uns aux autres, et répartis successivement selon la direction longitudinale (L), le troisième ensemble étant mobile en translation longitudinalement par rapport au châssis (10) au moins entre la configuration ouverte, dans laquelle les panneaux (30) du troisième ensemble sont au moins partiellement, et de préférence totalement, superposés aux panneaux (15) du premier ensemble en vue selon l'axe d'orientation (D), et la configuration fermée, dans laquelle les panneaux (30) du troisième ensemble dépassent au moins partiellement, et de préférence totalement, des panneaux (15) du premier ensemble et des panneaux (20) du deuxième ensemble en vue selon l'axe d'orientation (D), et
- un système d'actionnement (35) configuré pour actionner le deuxième ensemble, et optionnellement le troisième ensemble, au moins de la configuration ouverte à la configuration fermée, et inversement, le système d'actionnement comportant une pluralité de poulies (74, 76, 78, 80) montées sur le châssis (10).

2. - Ombrière (1) selon la revendication 1, dans laquelle :
- les panneaux (20) du deuxième ensemble sont fixés les uns aux autres par au moins deux câbles (37, 38), et
- optionnellement, les panneaux (30) du troisième ensemble sont fixés les uns aux autres par au moins deux câbles (37, 38).

3. - Ombrière (1) selon la revendication 2, dans laquelle chacun des deux câbles (37, 38) forment respectivement un lacet fermé, chacun des lacets étant tendu respectivement entre deux des poulies (74, 76, 78, 80).

4. - Ombrière (1) selon l'une quelconque des revendications 1 à 3, dans laquelle le système d'actionnement (35) comprend en outre :
- au moins un arbre (70) monté rotatif sur le châssis (10), et
- au moins un moteur (61) configuré pour entraîner l'arbre (70), deux des poulies (74, 76, 78, 80) étant fixées sur l'arbre (70).

5. - Ombrière (1) selon l'une quelconque des revendications 1 à 4, dans laquelle les panneaux (15, 20, 30) présentent une même extension (E) selon la direction longitudinale (L).

6. Ombrière (1) selon la revendication 5, dans laquelle :
- les panneaux (15) du premier ensemble sont répartis régulièrement selon la direction longitudinale (L), deux panneaux (15) successifs du premier ensemble étant séparés longitudinalement par un même écart (EE),
- les panneaux (20) du deuxième ensemble sont répartis régulièrement selon la direction longitudinale (L), deux panneaux (20) successifs du deuxième ensemble étant séparés longitudinalement par ledit écart (EE),
- optionnellement les panneaux (30) du troisième ensemble sont répartis régulièrement selon la direction longitudinale (L), deux panneaux (30) successifs du troisième ensemble étant séparés longitudinalement par ledit écart (EE),
ledit écart (EE) étant sensiblement égal à deux fois ladite extension (E) si l'ombrière (1) comporte le troisième ensemble optionnel, ou sensiblement égal à ladite extension (E) si l'ombrière (1) ne comporte pas le troisième ensemble optionnel.

7. - Ombrière (1) selon l'une quelconque des revendications 1 à 6, dans laquelle :
- le châssis (10) comprend deux longerons (51) opposés selon une direction transversale (T) perpendiculaire à la direction longitudinale (L), et
- les panneaux (20) du deuxième ensemble et optionnellement les panneaux (30) du troisième ensemble s'étendent transversalement entre les longerons (51) et sont supportés par les longerons (51).

8. - Ombrière(1) selon la revendication 7, dans laquelle :
- les longerons (51) définissent des rainures (53) de guidage des panneaux (20, 30), et
- les panneaux (20) du deuxième ensemble et optionnellement les panneaux (30) du troisième ensemble comportent des roulettes (41) adaptées pour rouler dans lesdites rainures (53).

9. - Ombrière (1) selon l'une quelconque des revendications 1 à 8, dans laquelle le châssis (10) comprend au moins un support (43), et une partie mobile (45) incluant les deux longerons (51), la partie mobile (45) étant déplaçable en rotation par rapport au support (43) autour d'un axe de pivotement (Δ) sensiblement parallèle à la direction longitudinale (L) entre au moins deux positions distinctes.

10. - Procédé pour former et ajuster une ombre sur une surface, comprenant les étapes suivantes :
- fourniture d'une ombrière (1) selon l'une quelconque des revendications 1 à 9,
- actionnement du deuxième ensemble pour déplacer le deuxième ensemble en translation longitudinalement par rapport au châssis (10) au moins entre la configuration ouverte de l'ombrière (1) et la configuration fermée, ou inversement,
- optionnellement actionnement du troisième ensemble pour déplacer le troisième ensemble en translation longitudinalement par rapport au châssis (10) au moins entre la configuration ouverte de l'ombrière (1) et la configuration fermée, ou inversement, et
- production d'électricité par au moins certains des panneaux (15, 20, 30), et récupération de l'électricité produite.

## Patentansprüche

1. Sonnendach (1), das angepasst ist, um einen anpassbaren Schatten (3) auf einer Fläche (5), insbesondere einer bepflanzten Fläche, zu bilden, das Sonnendach (1) umfassend:
- mindestens ein Gestell (10), das sich in einer Längsrichtung (L) erstreckt,
- eine erste Anordnung von Photovoltaikplatten (15), die auf dem Gestell (10) im Wesentlichen orthogonal zu einer gleichen Ausrichtungsachse (D) montiert sind, in Bezug aufeinander feststehend und nacheinander in Längsrichtung (L) verteilt sind,
- eine zweite Anordnung von lichtundurchlässigen, vorzugsweise photovoltaischen Platten (20), die auf dem Gestell (10) im Wesentlichen orthogonal zu der Ausrichtungsachse (D) montiert, aneinander befestigt und nacheinander in Längsrichtung (L) verteilt sind, wobei die zweite Anordnung in Längsrichtung in Bezug auf das Gestell zumindest zwischen einer offenen Konfiguration des Sonnendachs (1), in der die Platten (20) der zweiten Einheit zumindest teilweise und vorzugsweise vollständig über den Platten (15) der ersten Einheit in der Ansicht entlang der Ausrichtungsachse (D) sind, und einer geschlossenen Konfiguration des Sonnendachs (1), in der die Platten (20) der zweiten Einheit zumindest teilweise und vorzugsweise vollständig über die Platten (15) der ersten Einheit in der Ansicht entlang der Ausrichtungsachse (D) hervorstehen, translatorisch beweglich ist,
- optional eine dritte Anordnung von lichtundurchlässigen, vorzugsweise photovoltaischen Platten (30), die auf dem Gestell (10) im Wesentlichen orthogonal zu der Ausrichtungsachse (D) montiert, aneinander befestigt und nacheinander entlang der Längsrichtung (L) verteilt sind, wobei die dritte Anordnung in Längsrichtung in Bezug auf das Gestell (10) zumindest zwischen der offenen Konfiguration, in der die Platten (30) der dritten Einheit zumindest teilweise und vorzugsweise vollständig über den Platten (15) der ersten Einheit in der Ansicht entlang der Ausrichtungsachse (D) sind, und der geschlossenen Konfiguration, in der die Platten (30) der dritten Einheit zumindest teilweise und vorzugsweise vollständig über die Platten (15) der ersten Einheit und die Platten (20) der zweiten Einheit in der Ansicht entlang der Ausrichtungsachse (D) hervorstehen, translatorisch beweglich ist, und
- ein Betätigungssystem (35), das konfiguriert ist, um die zweite Anordnung und optional die dritte Anordnung zumindest von der offenen Konfiguration in die geschlossene Konfiguration und umgekehrt zu betätigen, das Betätigungssystem umfassend eine Vielzahl von Riemenscheiben (74, 76, 78, 80), die an dem Gestell (10) montiert sind.

2. Sonnendach (1) nach Anspruch 1, wobei:
- die Platten (20) der zweiten Anordnung durch mindestens zwei Kabel (37, 38) aneinander befestigt sind, und
- optional die Platten (30) der dritten Anordnung durch mindestens zwei Kabel (37, 38) aneinander befestigt sind.

3. Sonnendach (1) nach Anspruch 2, wobei jedes der zwei Kabel (37, 38) jeweils eine geschlossene Schleife bildet, wobei jede der Schleifen jeweils zwischen zwei der Riemenscheiben (74, 76, 78, 80) gespannt ist.

4. Sonnendach (1) nach einem der Ansprüche 1 bis 3, wobei das Betätigungssystem (35) ferner Folgendes umfasst:
- mindestens eine Welle (70), die drehbar auf dem Gestell (10) montiert ist, und
- mindestens einen Motor (61), der konfiguriert ist, um die Welle (70) anzutreiben, wobei zwei der Riemenscheiben (74, 76, 78, 80) aufn der Welle (70) befestigt sind.

5. Sonnendach (1) nach einem der Ansprüche 1 bis 4, wobei die Platten (15, 20, 30) in Längsrichtung (L) die gleiche Erstreckung (E) aufweisen.

6. Sonnendach (1) nach Anspruch 5, wobei:
- die Platten (15) der ersten Anordnung gleichförmig entlang der Längsrichtung (L) verteilt sind, wobei zwei aufeinanderfolgende Platten (15) der ersten Anordnung in Längsrichtung durch einen gleichen Abstand (EE) getrennt sind,
- die Platten (20) der zweiten Anordnung gleichförmig entlang der Längsrichtung (L) verteilt sind, wobei zwei aufeinanderfolgende Platten (20) der zweiten Anordnung in Längsrichtung durch den Abstand (EE) getrennt sind,
- optional die Platten (30) der dritten Anordnung gleichförmig entlang der Längsrichtung (L) verteilt sind, wobei zwei aufeinanderfolgende Platten (30) der dritten Anordnung in Längsrichtung durch den Abstand (EE) getrennt sind,
wobei der Abstand (EE) im Wesentlichen gleich wie das Zweifache der Erstreckung (E) ist, wenn das Sonnendach (1) die dritte optionale Anordnung umfasst, oder im Wesentlichen gleich wie die Erstreckung (E) ist, wenn das Sonnendach (1) die dritte optionale Anordnung nicht umfasst.

7. Sonnendach (1) nach einem der Ansprüche 1 bis 6, wobei:
- das Gestell (10) zwei Längsträger (51) umfasst, die in einer Querrichtung (T) senkrecht zu der Längsrichtung (L) gegenüber sind, und
- sich die Platten (20) der zweiten Anordnung und optional die Platten (30) der dritten Anordnung quer zwischen den Längsträgern (51) erstrecken und von den Längsträgern (51) getragen werden.

8. Sonnendach (1) nach Anspruch 7, wobei:
- die Längsträger (51) Nuten (53) zum Führen der Platten (20, 30) definieren, und
- die Platten (20) der zweiten Anordnung und optional die Platten (30) der dritten Anordnung Rollen (41) umfassen, die zum Rollen in den Nuten (53) angepasst sind.

9. Sonnendach (1) nach einem der Ansprüche 1 bis 8, wobei das Gestell (10) mindestens einen Träger (43) und einen beweglichen Teil (45) einschließlich der zwei Längsträger (51) umfasst, wobei der bewegliche Teil (45) in Bezug auf den Träger (43) um eine Schwenkachse (Δ), die im Wesentlichen parallel zu der Längsrichtung (L) ist, zwischen mindestens zwei verschiedenen Positionen drehbar beweglich ist.

10. Verfahren zum Bilden und Anpassen eines Schattens auf einer Oberfläche, umfassend die folgenden Schritte:
- Bereitstellen mindestens eines Sonnendachs (1) nach einem der Ansprüche 1 bis 9,
- Betätigen der zweiten Anordnung, um die zweite Anordnung in Längsrichtung translatorisch in Bezug auf das Gestell (10) zumindest zwischen der offenen Konfiguration des Sonnendachs (1) und der geschlossenen Konfiguration oder umgekehrt zu bewegen,
- optional Betätigen der dritten Anordnung, um die dritte Anordnung in Längsrichtung translatorisch in Bezug auf das Gestell (10) zumindest zwischen der offenen Konfiguration des Sonnendachs (1) und der geschlossenen Konfiguration oder umgekehrt zu bewegen, und
- Erzeugen von Strom durch mindestens gewisse der Platten (15, 20, 30) und Rückgewinnung des erzeugten Stroms.

## Claims

1. A shade house (1) adapted to form an adjustable shadow (3) on a surface (5), in particular a planted surface, the shade house (1) comprising:
- at least one frame (10) extending in a longitudinal direction (L),
- a first set of photovoltaic panels (15) mounted on the frame (10) substantially orthogonal to a same orientation axis (D), fixed relative to each other, and distributed successively along the longitudinal direction (L),
- a second set of opaque panels (20), preferably photovoltaic, mounted on the frame (10) substantially orthogonal to the steering shaft (D), fixed to each other, and distributed successively in the longitudinal direction (L), the second set being movable in translation longitudinally relative to the frame at least between an open configuration of the shade house (1), wherein the panels (20) of the second set are at least partially, and preferably completely, superposed on the panels (15) of the first set when viewed along the orientation axis (D), and a closed configuration of the shade house (1), wherein the panels (20) of the second set protrude at least partially, and preferably completely, beyond the panels (15) of the first set when viewed along the orientation axis (D),
- optionally, a third set of opaque panels (30), preferably photovoltaic, mounted on the frame (10) substantially orthogonal to the orientation axis (D), fixed to each other, and distributed successively in the longitudinal direction (L), the third set being movable in translation longitudinally relative to the frame (10) at least between the open configuration, wherein the panels (30) of the third set are at least partially, and preferably completely, superposed on the panels (15) of the first set when viewed along the orientation axis (D), and the closed configuration, wherein the panels (30) of the third set protrude at least partially, and preferably completely, from the panels (15) of the first set and the panels (20) of the second set when viewed along the orientation axis (D), and
- an actuation system (35) configured to actuate the second set, and optionally the third set, at least from the open configuration to the closed configuration, and vice versa, the actuation system comprising a plurality of pulleys (74, 76, 78, 80) mounted on the frame (10).

2. The shade house (1) according to claim 1, wherein:
- the panels (20) of the second assembly are fixed to each other by at least two cables (37, 38), and
- optionally, the panels (30) of the third set are fixed to each other by at least two cables (37, 38).

3. The shade house (1) according to claim 2, wherein each of the two cables (37, 38) respectively form a closed loop, each of the loops being stretched between two of the pulleys (74, 76, 78, 80) respectively.

4. The shade house (1) according to any one of claims 1 to 3, wherein the actuating system (35) further comprises :
- at least one shaft (70) rotatable and mounted on the frame (10), and
- at least one motor (61) configured to drive the shaft (70), two of the pulleys (74, 76, 78, 80) being fixed to the shaft (70).

5. The shade house (1) according to any one of claims 1 to 4, wherein the panels (15, 20, 30) have a same extension (E) in the longitudinal direction (L).

6. The shade house (1) according to claim 5, wherein:
- the panels (15) of the first set are evenly distributed along the longitudinal direction (L), two successive panels (15) of the first set being separated longitudinally by a same gap (EE),
- the panels (20) of the second set are evenly distributed along the longitudinal direction (L), two successive panels (20) of the second set being separated longitudinally by said gap (EE),
- optionally the panels (30) of the third set are evenly distributed along the longitudinal direction (L), two successive panels (30) of the third set being separated longitudinally by said gap (EE),
said gap (EE) being substantially equal to twice said extension (E) if the shade house (1) has the third optional set, or substantially equal to said extension (E) if the shade house (1) does not have the third optional set.

7. The shade house (1) according to any one of claims 1 to 6, wherein:
- the frame (10) comprises two stringers (51) opposed in a transverse direction (T) perpendicular to the longitudinal direction (L), and
- the panels (20) of the second set and optionally the panels (30) of the third set extend transversely between the stringers (51) and are supported by the stringers (51).

8. The shade house (1) according to claim 7, wherein:
- the stringers (51) define grooves (53) for guiding the panels (20, 30), and
- the panels (20) of the second set and optionally the panels (30) of the third set have rollers (41) adapted to roll in said grooves (53).

9. The shade house (1) according to any one of claims 1 to 8, wherein the frame (10) comprises at least one support (43), and one movable part (45) including the two stringers (51), the movable part (45) being rotatable relative to the support (43) about a pivot axis (Δ) substantially parallel to the longitudinal direction (L) between at least two distinct positions.

10. A method for forming and adjusting a shadow on a surface, comprising the following steps:
- providing a shade house (1) according to any one of claims 1 to 9,
- actuation of the second set to move the second set longitudinally in translation relative to the frame (10) at least between the open configuration of the shade house (1) and the closed configuration, or vice versa,
- optionally actuation of the third assembly to move the third assembly longitudinally relative to the frame (10) at least between the open configuration of the shade house (1) and the closed configuration, or vice versa, and
- production of electricity by at least some of the panels (15, 20, 30), and recovery of the electricity produced.
